# EUROPÄISCHE PATENTSCHRIFT

(11) **EP 1 914 141 B1**
(45) Veröffentlichungstag und Bekanntmachung des Hinweises auf die Patenterteilung: **05.08.2009**
(21) Anmeldenummer: 07115955.2
(22) Anmeldetag: 07.09.2007
(51) Int. Cl.: B60W 30/18, B60W 10/18, B60W 10/06, B60W 10/20, B60W 10/22, B60W 10/10, B60W 10/12

(54) **Bedienkonzept zum Einstellen verschiedener Fahrdynamik-Charakteristika an einem Fahrzeug**
Operating concept for setting various driving dynamics characteristics in a vehicle
Concept de commande pour l'installation de différentes caractéristiques de dynamique de conduite sur un véhicule

(30) Priorität: 21.10.2006 DE 102006049727
(43) Veröffentlichungstag der Anmeldung: 23.04.2008
(73) Patentinhaber: Bayerische Motoren Werke Aktiengesellschaft, 80809 München (DE)
(72) Erfinder: Vieler, Holger, 85635 Höhenkirchen (DE); Fuchs, Dietmar, 85591 Vaterstetten (DE); Pontow, Stephan, 85586 Poing (DE)

(56) Entgegenhaltungen:
- EP-A- 1 355 209
- WO-A-20/04087484
- DE-A1- 10 335 057
- DE-A1- 19 508 302
- DE-A1- 19 951 119

## Beschreibung

Die Erfindung betrifft ein Bedienkonzept zum Einstellen verschiedener Fahrdynamik-Charakteristika an einem nicht spurgebundenen Kraftfahrzeug, insbesondere an einem Personenkraftwagen, wobei für unterschiedliche Fahrzustände ein unterschiedliches Verhalten von die Längsdynamik, die Vertikaldynamik und die Querdynamik des Fahrzeugs beeinflussenden Stellgliedern auswählbar ist. Zum bekannten Stand der Technik wird beispielshalber auf das sog. "Terrain Response System" im aktuellen Fahrzeug "Land Rover Discovery" verwiesen, bei welchem vom Fahrer mittels eines Drehschalters an der Mittelkonsole ein Fahrbahn-Untergrund ausgewählt werden kann, auf dem das Fahrzeug bewegt wird, nämlich eine Straße oder Sand oder Schlamm oder Gras bzw. Schnee oder Felsen. In Abhängigkeit von dieser Auswahl werden dann die Fahrzeug-Federung sowie das Verhalten des Fzg.-Antriebsystems und des Fzg.-Bremssystems auf vorgegebene Charakteristika eingestellt. Weiterer bekannter Stand der Technik ist ein sog. Sport-Schalter im Bedienbereich des Fahrers, mit welchem er ein irgendwie geartetes sportlicheres Fahrverhalten einstellen kann, ohne dabei zu wissen, welche Auswirkungen dies konkret hat.

Auch die DE 199 51 119 A1 zeigt die Merkmale des Oberbegriffs des vorliegenden Patentanspruchs 1 sowie ein erstes Bedienelement, mit dem auf ein Längsdynamik-Stellglied, nämlich ein Gas- und/oder Bremspedal, Einfluss genommen werden kann. Ferner zeigt die EP-A-1355209 ein Bedienelement oder auch zwei Bedienelemente oder alternativ eine Vielzahl von Knöpfen, zur Beeinflussung praktisch aller für die Fahrdynamik relevanter Funktionen.

Grundsätzlich sind solche Auswahl- oder Bedienkonzepte attraktiv, da der Fahrer des Fahrzeugs ein unterschiedliches, bspw. dem jeweiligen Terrain, auf dem sich das Fahrzeug bewegt, durch die Entwicklungsingenieure dieses Fahrzeugs "angepasstes" Fahrzeug-Verhalten auswählen kann.

Dennoch ist eine vorteilhafte Weiterentwicklung eines derartigen Konzepts möglich, die aufzuzeigen sich die vorliegende Erfindung zur Aufgabe gestellt hat.
Die Lösung dieser Aufgabe ist **dadurch gekennzeichnet, dass** mittels eines ersten Bedienelements eine oder mehrere definierte Einsatzart(en) für das Kraftfahrzeug auswählbar ist/sind, die alleine auf einen oder mehrere Längsdynamik-Stellglieder Einfluss nimmt oder nehmen, und dass mittels eines zweiten Bedienelements zumindest drei unterschiedliche Fahrdynamik-Charakteristika im Bereich zwischen Komfort und maximaler Fahr-Stabilität einerseits sowie Sportlichkeit und eingeschränkter Fahr-Stabilität andererseits auswählbar sind, in denen eine Zwangskopplung zwischen Längsdynamik-Stellgliedern, Vertikaldynamik-Stellgliedern und Querdynamik-Stellgliedern vorliegt, während in zumindest einer weiteren individuell einstellbaren Fahrdynamik-Charakteristik diese genannte Zwangskopplung aufgehoben ist. Vorteilhafte Aus- und Weiterbildungen sind Inhalt der Unteransprüche.

Es wurde erkannt, dass es unter Bezugnahme auf die für den Fachmann übliche Unterteilung der Fahrzeug-Dynamik in eine Längsdynamik, eine Querdynamik und eine Vertikaldynamik im Hinblick auf unterschiedliche Fahrzustände bzw. unterschiedliches Verhalten (= Charakteristik) des Fahrzeugs sinnvoll ist, dem Fahrer zwei verschiedene grundsätzliche Auswahlmöglichkeiten zu geben, die einander noch überlagert werden können. Eine dieser beiden Auswahlmöglichkeiten soll zumindest einen besonderen Betriebsmodus abdecken, in welchem besonders hohe Anforderungen an die Längsdynamik gestellt werden. In diesem Sinne ist ein bevorzugter besonderer Betriebsmodus der Fahrzeug-Längsdynamik ein sog. Traktionsmodus, in welchem sichergestellt wird, dass sich das Fahrzeug unter härtesten Randbedingungen, wie bspw. auf losem Untergrund oder in tiefem Schnee überhaupt fortbewegen kann. (Ein weiterer besonderer Betriebsmodus der Längsdynamik ist die dem Fachmann bekannte "Hill-Descent-Control", auch Bergabfahr-Modus genannt.

Für den oder die besondere Anforderungen an die für die Längsdynamik des Fahrzeugs zuständigen Steuerungs- und Regelsysteme stellenden Betriebsmodus bzw. Betriebsmodi wird somit ein eigenständiges Bedienelement vorgeschlagen, mit Hilfe dessen der Fahrer im von ihm festzustellenden Bedarfsfall diesen speziellen Betriebszustand, nämlich bspw. den Traktionsmodus oder den Bergabfahr-Modus oder einen anderen speziellen Längsdynamik-Modus, aktivieren kann, und mit dem alleine auf einen oder mehrere Längsdynamik-Stellglieder Einfluss genommen wird. In diesem Zusammenhang sei kurz auf bevorzugt zum Einsatz kommende Stellglieder für die Fahrzeug-Längsdynamik eingegangen. Bei diesen kann es sich um ein Stellglied zur radindividuellen Bremsen-Ansteuerung handeln, die bspw. gemäß derzeitigem Stand der Technik hydraulisch erfolgt, wobei die Ansteuerlogik für die Bremsdruckventile der einzelnen Fahrzeugräder unterschiedlich sein kann. Es kann jedoch auch eine sog. Fahrpedal-Kennlinie mittels eines Stellglieds beeinflussbar sein, so dass das mit diesem Fahrpedal durch den Fahrer angesteuerte Antriebsaggregat des Fahrzeugs bei gleicher Fahrpedal-Betätigung eine unterschiedliche Leistung abgeben kann. In vergleichbarer Weise können mittels eines Stellglieds an einem automatisch schaltenden Getriebe im Fahrzeug-Antriebsstrang unterschiedliche Schaltpunkte eingestellt werden. Weiterhin kann mittels eines Stellglieds das vom Fzg.-Antriebsaggregat abgegebene Antriebsmoment unterschiedlich auf die einzelnen Fzg.-Achsen oder Fzg.-Räder verteilt werden und schließlich kann mittels eines Stellglieds das oder die vom Antriebsaggregat des Kraftfahrzeugs abgegebene Moment oder Leistung direkt beeinflusst werden.

Neben dem weiter oben genannten ersten Bedienelement, mit dem alleine auf einen oder mehrere Längsdynamik-Stellglieder Einfluss genommen wird, wird nunmehr ein zweites Bedienelement vorgeschlagen, mit dem unterschiedliche Fahrzeug-Charakteristika ausgewählt werden können, wobei in einigen (zumindest in zwei) Charakteristika jeweils eine Zwangskopplung zwischen einem oder mehreren Längsdynamik-Stellglied(ern) und einem oder mehreren Querdynamik-Stellglied(ern) und einem oder mehreren Vertikaldynamik-Stellglied(ern) vorliegt. Als mit diesem zweiten Bedienelement auswählbare unterschiedliche Betriebsmodi oder Fahrdynamik-Charkteristika sollen zumindest die drei folgenden auswählbar sein, nämlich erstens ein komfortables Fahrverhalten mit maximaler Fahrstabilität, zweitens ein ausgeprägt sportliches Fahrverhalten mit eingeschränkter Fahr-Stabilität, sowie drittens ein individuell einstellbares Fahrverhalten bzw. eine individuell festlegbare Charakteristik.

Abweichend vom eingangs genannten Stand der Technik ist dem Fahrer nun die Möglichkeit eröffnet, nicht nur zwischen einem "normalen" Fahrverhalten sowie einem "sportlichen Fahrverhalten" auswählen zu können bzw. sich nicht zwischen verschiedenen Fahrbahn-Untergründen entscheiden zu müssen, ohne dabei zu wissen, was aufgrund einer solchen getätigten Auswahl geschieht, sondern bewusst entweder ein sehr komfortables und sicheres Fahren wählen zu können, alternativ ein extrem sportliches Fahren mit eingeschränkter Fahr-Stabilität, und schließlich ein spezifisches, seinem persönlichen Wunsch entsprechendes Fahrverhalten. In diesem Zusammenhang sei auf den Zustand des sicheren Fahrens mit maximaler Fahr-Stabilität bzw. denjenigen mit eingeschränkter Fahr-Stabilität eingegangen. Bekanntlich existieren verschiedene Fahrdynamik-Regelsysteme, mit Hilfe derer ein insbesondere zweispuriges Kraftfahrzeug in kritischen Fahrzuständen auf Spur gehalten werden kann, so insbesondere das elektronische Stabilisierungsprogramm ESP. Bei diesem wird bekanntlich mit Hilfe eines Gierratensensors sowie eines Querbeschleunigungssensors unter Berücksichtigung der Fahrgeschwindigkeit das tatsächliche Fahrverhalten ermittelt und mit dem vom Fahrer insbesondere mit seinem Lenkrad vorgegebenen Wunsch-Fahrverhalten verglichen. Liegt eine signifikante Abweichung vor, so versucht dieses System insbesondere durch gezielte Betätigung einzelner Radbremsen, das tatsächliche Fahrverhalten mit dem Wunsch des Fahrers in Übereinstimmung zu bringen. Dabei können solche den Fahrzustand stabilisierenden Regelsysteme unterschiedlich empfindlich arbeiten, d.h. verschiedene Ansprech-Schwellen aufweisen und teilweise außer Kraft gesetzt werden, wobei jedoch das bekannte ABS (= Antiblockiersystem beim Bremsen) nie deaktivierbar sein sollte.

Wie angegeben, soll bei den mit dem genannten zweiten Bedienelement auswählbaren vorgegebenen Fahr-Charakteristika, nämlich komfortabel und sicher bzw. sportlich mit eingeschränkter Fahr-Stabilität eine Zwangskopplung zwischen Stellgliedern für die Längsdynamik und solchen für die Querdynamik und solchen für die Vertikaldynamik vorliegen. In diesem Zusammenhang sei - nachdem weiter oben bereits bevorzugt zum Einsatz kommende Stellglieder für die Fahrzeug-Längsdynamik angegeben wurden - kurz auf bevorzugt zum Einsatz kommende Stellglieder für die Fahrzeug-Querdynamik und die Fahrzeug-Vertikaldynamik eingegangen: Als Stellglieder für die Vertikaldynamik können solche zur Beeinflussung der Dämpferkraft und/oder Stellglieder zur Beeinflussung der Federkraft im Fahrwerk des Fahrzeugs zum Einsatz kommen, d.h. dass die Charakteristik der den einzelnen Fzg.-Rädern (in Vertikalrichtung) zugeordneten Schwingungsdämpfer veränderbar sein kann und/oder das Verhalten der ebenfalls in Vertikalrichtung wirkenden Tragfedern zwischen den Rädern und dem Fahrzeug-Aufbau. Ebenso können Stellglieder zur Variation einer Wankmoment-Stabilisierung und/oder Nickmoment-Stabilisierung zum Einsatz kommen, mit Hilfe derer die Wankbewegung bzw. Nickbewegung des Fahrzeug-Aufbaus beeinflussbar ist, so bspw. hinsichtlich ihres Torsionsmomentes verstellbare (Quer-)Stabilisatoren. Das querdynamische Verhalten des Fahrzeugs hingegen kann durch ein Stellglied zur Verteilung eines Antriebsmoments und/oder Bremsmoments auf einzelne Fzg.-Räder (linksseitig bzw. rechtsseitig) beeinflusst werden und/oder durch ein Stellglied zur direkten Beeinflussung des Lenkwinkels lenkbarer Fzg.-Räder, so dass bspw. das Übersetzungsverhältnis zwischen dem Lenkrad des Fahrers und den lenkbaren Fzg.-Rädern veränderbar ist. Unter der genannten Zwangskopplung zwischen den einzelnen Stellgliedern ist dabei zu verstehen, dass mit dieser Zwangskopplung fest vorgegeben ist, wie sich die einzelnen Stellglieder verhalten, wenn der betreffende Modus, nämlich Komfort mit maximaler Stabilität einerseits bzw. Sportlichkeit mit eingeschränkter Stabilität andererseits, gewählt wird.

Was die dritte individuelle Auswahlmöglichkeit betrifft, über welche der Fahrer mittels des genannten zweiten Bedienelements ein spezifisches, seinem persönlichen Wunsch entsprechendes Fahrverhalten für unterschiedliche Stellglieder unterschiedlich einstellen kann, liegt hingegen keine solche Zwangskopplung (zwischen den einzelnen Stellgliedern) vor. Beispielsweise kann der Fahrer hier eine "sportliche" Fahrpedal-Kennlinie mit einer "komfortablen" Dämpferabstimmung und einer neutralen Lenkwinkel-Übersetzung kombinieren.
Zwar ist eine individuell einstellbare Fahrdynamik-Charakteristik, in der keine Zwangskopplung zwischen den unterschiedlichen Stellgliedern vorliegt, bereits aus der DE 103 35 058 A1 bekannt, wobei die Einstellung auf einem Display oder mittels mechanischer Elemente erfolgt. Vorliegend wird jedoch abweichend vom hier gesamthaft erläuterten Stand der Technik vorgeschlagen, mit einem zweiten Bedienelement sowohl Fahrdynamik-Charakteristika mit Zwangskopplung als auch ohne Zwangskopplung einzustellen, wobei zusätzlich ist ein erstes Bedienelement vorgesehen ist.

Im Sinne einer vorteilhaften Weiterbildung können dabei für die individuelle Einstellbarkeit der Fahrdynamik-Charakteristik die einzelnen Stellglieder für den Fahrer auf einem Bildschirm visualisiert werden, so dass für den Fahrer klar ersichtlich wird, welches Stellglied er wie einstellen möchte.

## Patentansprüche

1. Bedienkonzept zum Einstellen verschiedener Fahrdynamik-Charakteristika an einem nicht spurgebundenen Kraftfahrzeug, insbesondere Personenkraftwagen, wobei für unterschiedliche Fahrzustände ein unterschiedliches Verhalten von die Längsdynamik, die Vertikaldynamik und die Querdynamik des Fahrzeugs beeinflussender Stellglieder auswählbar ist,
**dadurch gekennzeichnet, dass** mittels eines ersten Bedienelements eine oder mehrere definierte Einsatzart(en) für das Kraftfahrzeug auswählbar ist/sind, die alleine auf einen oder mehrere Längsdynamik-Stellglieder Einfluss nimmt oder nehmen und dass mittels eines zweiten Bedienelements zumindest drei unterschiedliche Fahrdynamik-Charakteristika im Bereich zwischen Komfort und maximaler Stabilität einerseits sowie Sportlichkeit und eingeschränkter Stabilität andererseits auswählbar sind, in denen eine Zwangskopplung zwischen Längsdynamik-Stellgliedern, Vertikaldynamik-Stellgliedern und Querdynamik-Stellgliedern vorliegt, während in zumindest einer weiteren individuell einstellbaren Fahrdynamik-Charakteristik diese genannte Zwangskopplung aufgehoben ist.

2. Bedienkonzept nach Anspruch 1,
**dadurch gekennzeichnet, dass** als definierte Einsatzart(en) ein Traktions-Modus und/oder ein Bergabfahr-Modus auswählbar ist

3. Bedienkonzept nach Anspruch 1 oder 2,
**dadurch gekennzeichnet, dass** für die Auswahl der individuell einstellbaren Fahrdynamik-Charakteristik die einzelnen Stellglieder auf einem Bildschirm visualisiert werden.

## Claims

1. An operating concept for adjusting various driving dynamics characteristics on a non-rail-bound motor vehicle, especially a passenger car, a different behaviour for actuators influencing the longitudinal dynamics, the vertical dynamics and the transverse dynamics of the vehicle being selectable for different driving states, **characterised in that** one or more defined type(s) of use for the motor vehicle can be selected by means of a first operating element, which only influences or influence one or more longitudinal dynamics actuators and **in that**, by means of a second operating element, at least three different driving dynamics characteristics in the range between comfort and maximum stability, on the one hand, and sportiness and limited stability, on the other hand, can be selected, in which a forced coupling is present between longitudinal dynamics actuators, vertical dynamics actuators and transverse dynamics actuators, while said forced coupling is eliminated in at least one further individually adjustable driving dynamics characteristic.

2. An operating concept according to claim 1, **characterised in that** a traction mode and/or a downhill driving mode can be selected as defined type(s) of use.

3. An operating concept according to claim 1 or 2, **characterised in that** the individual actuators are displayed on a screen to select the individually adjustable driving dynamics characteristic.

## Revendications

1. Concept de commande pour régler différentes caractéristiques de la dynamique de roulage d'un véhicule ne circulant pas en site propre, notamment d'un véhicule automobile de tourisme, selon lequel pour différents états de conduite, on sélectionne des organes de réglage influençant un comportement différent de la dynamique longitudinale, de la dynamique verticale et de la dynamique transversale véhicule,
**caractérisé en ce qu'**
à l'aide d'un premier élément de commande, on sélectionne un ou plusieurs modes d'utilisation définis du véhicule automobile, qui influencent seuls un ou plusieurs organes de réglage de la dynamique longitudinale, et
à l'aide d'un second élément de commande, on sélectionne au moins trois caractéristiques de dynamique de roulage différentes dans la plage entre d'une part, le confort et la stabilité maximale, et d'autre part, le caractère sportif et une stabilité limitée, caractéristiques pour lesquelles il y a un couplage forcé entre les organes de réglage de la dynamique longitudinale, les organes de réglage de la dynamique verticale et les organes de réglage de la dynamique transversale alors que, dans au moins une autre caractéristique de dynamique de roulage, réglable individuellement, ce couplage forcé est neutralisé.

2. Concept de commande selon la revendication 1,
**caractérisé en ce que**
le mode d'utilisation défini se sélectionne entre le mode de traction et/ou le mode de descente en pente.

3. Concept de commande selon la revendication 1 ou 2,
**caractérisé en ce que**
les différents organes de réglage sont visualisés sur un écran pour la sélection de la caractéristique de dynamique de roulage réglable individuellement.
